# DEMANDE DE BREVET EUROPEEN

(11) **EP 0 633 486 A1**
(43) Date de publication de la demande: **11.01.1995**
(21) Numéro de dépôt: 94401521.3
(22) Date de dépôt: 04.07.1994
(51) Int. Cl.: G02B 6/42

(54) **Ensemble de connexion électro-optique et élément de connexion pour celui-ci**

(30) Priorité: 08.07.1993 FR 9308399
(71) Demandeur: FRAMATOME CONNECTORS INTERNATIONAL, 92400 Courbevoie (FR)
(72) Inventeur: Gazelot, Yves, FR-77170 Brie Comte Robert (FR)
(74) Mandataire: Keib, Gérard

(57) **Abrégé**

L'invention concerne un ensemble de connexion électro-optique, qui comporte:
- un premier élément de connexion comportant un premier corps central (130) dans lequel sont disposés une pluralité de premiers éléments optiques qui sont des embases actives (100) dont chacune comporte au moins un composant électro-optique (102),
- un deuxième élément de connexion comportant un deuxième corps central (2,3) dans lequel sont disposés une pluralité de deuxièmes éléments optiques qui sont des fiches de connexion (10) de fibre optique,

les embases actives (100) présentant une première région avant (103) logée dans le premier corps central (130) et rappelée élastiquement par des premiers éléments élastiques (111) et les fiches de connexion (10) présentant une deuxième région avant (4,20) logée dans le deuxième corps central (2,3), la deuxième région avant (4,20) des fiches de connexion (10) étant rappelée élastiquement par des deuxièmes éléments élastiques (9).

## Description

La présente invention a pour objet un ensemble de connexion électro-optique du type permettant de coupler un composant électro-optique, par exemple une diode électroluminescente par exemple une diode laser ou une photo-diode, à une fibre optique.

On connaît de l'art antérieur des ensembles de connexion individuelle entre un composant électro-optique et une fibre optique mettant en oeuvre par exemple une embase conforme au standard industriel ST de la norme MIL-C-83522.

Dans le cas où l'on veut réaliser une pluralité de telles connexions, il faut disposer côte-à-côte autant d'ensembles de connexion individuelle que de connexions à réaliser.

Il en résulte une certaine complication mécanique ainsi que des difficultés d'alignement qui en compliquent la mise en oeuvre.

La présente invention a pour objet un ensemble de connexion électro-optique qui permet de réaliser facilement une pluralité de connexions.

Dans ce but, l'invention concerne un ensemble de connexion électro-optique caractérisé en ce qu'il comporte :
- un premier élément de connexion comportant un premier corps central dans lequel sont disposés une pluralité de premiers éléments optiques qui sont des embases actives dont chacune comporte au moins un composant électro-optique,
- un deuxième élément de connexion comportant un deuxième corps central dans lequel sont disposés une pluralité de deuxièmes éléments optiques qui sont des fiches de connexion de fibre optique,

Ces embases actives présentant une première région avant logée dans le premier corps central et qui peut être rappelée élastiquement par des premiers éléments élastiques et les fiches de connexion présentant une deuxième région avant logée dans le deuxième corps central, la deuxième région avant des fiches de connexion pouvant être rappelée élastiquement par des deuxièmes éléments élastiques, les premières et deuxièmes régions avant étant conformées de manière à permettre une interconnexion optique entre les fiches et les embases qui se correspondent, au moins une des première ou deuxième région avant étant rappelée élastiquement. Les premiers et deuxièmes éléments élastiques peuvent être disposés de manière telle que, pour chaque couple de premier et deuxième éléments optiques, la région avant d'un des éléments optiques du couple est rappelée en butée arrière sur le corps central dans lequel il est disposé et la région avant de l'autre élément optique du couple est rappelée en butée avant sur le corps central dans lequel il est disposé.

De la sorte, la disposition des éléments de connexion dans les premier et deuxième corps centraux permet de les présenter l'un à l'autre sans problème particulier d'alignement, alors que la présence des premier et deuxième éléments élastiques donnent un degré de liberté axial à la connexion tout en permettant que celle-ci soit maintenue avec une force d'application assurant une bonne transmission optique.

Il est avantageux que les premières régions avant des embases actives soient rappelées en butée arrière sur le premier corps central par les premiers éléments élastiques alors que les deuxièmes régions avant des fiches de connexion sont rappelées en butée avant sur le deuxième corps central par les deuxièmes éléments élastiques.

Selon un mode de réalisation avantageux, le premier élément élastique est un premier ressort intercalé entre une face arrière du premier corps central et un boîtier de l'embase dans laquelle est logé ledit composant électro-optique.

Selon un mode de réalisation préféré, la première région avant comporte au moins un ergot et le premier corps central présente au moins une rainure non débouchante au fond de laquelle l'ergot vient en butée arrière sous l'action du premier élément élastique.

Le premier corps central peut alors présenter au moins une rainure débouchante décalée angulairement par rapport à la rainure non débouchante de manière à permettre d'introduire la première région avant dans le premier corps central, puis, par rotation, de permettre à l'ergot de rejoindre l'entrée de la rainure aébouchante puis venir en butée arrière au fond de celle-ci.

Il est avantageux que la deuxième région avant des fiches de connexion soit logée dans une ouverture du deuxième corps central, le deuxième élément élastique étant alors disposé dans une région élargie de cette ouverture, entre le fond de cette région élargie et une première collerette portée par la deuxième partie avant, la deuxième partie avant portant une deuxième collerette disposée de manière à assurer ladite butée vers l'avant.

Les fiches de connexion peuvent être avantageusement montées avec repérage angulaire, par exemple de type hexagonal.

L'invention concerne également un élément de connexion, caractérisé en ce qu'il comporte un premier corps central dans lequel sont disposés une pluralité de premiers éléments optiques qui sont des embases actives dont chacune comporte au moins un composant électro-optique et présente une première région avant logée dans le premier corps central et rappelée élastiquement par des premiers éléments élastiques.

La première région avant peut alors comporter au moins un ergot et le premier corps central peut présenter au moins une rainure non débouchante au fond de laquelle l'ergot vient en butée arrière sous l'action du premier élément élastique.

Le premier corps central peut alors présenter au moins une rainure débouchante décalée angulairement par rapport à la rainure non débouchante de manière à permettre d'introduire la première région avant dans le premier corps central, puis, par rotation, de permettre à l'ergot de rejoindre l'entrée de la rainure non débouchante puis, venir en butée arrière au fond de celle-ci.

L'invention concerne enfin un élément de connexion, caractérisé en ce qu'il comporte un deuxième corps central dans lequel sont disposés une pluralité de deuxièmes éléments optiques qui sont des fiches de connexion de fibre optique présentant une deuxième région avant logée dans le deuxième corps central, ladite région avant étant rappelée élastiquement par des deuxièmes éléments élastiques.

D'autres caractéristiques et avantages de l'invention apparaîtront à la lecture de la description détaillée ci-dessous faite en référence aux dessins annexés :
- les figures 1a et 1b représentent, respectivement, une coupe partielle d'un élément de connexion selon l'invention comportant plusieurs embases actives, et une vue latérale en coupe partielle de la figure 1a,
- les figures 1c et 1d représentent des détails illustrant le montage des composants électro-optiques dans le corps central de l'élément de connexion des figures 1a et 1b,
- les figures 2a et 2b représentent, respectivement, en perspective et en coupe longitudinale, une embase conforme au standard ST de la norme MIL-C-83522 et adaptée pour être mise en oeuvre selon l'invention,
- la figure 3 représente une vue avec coupe partielle de l'élément de connexion dans lequel est disposée une pluralité de fiches de connexion de fibres optiques,
- les figures 4a et 4b représentent, respectivement, en coupe partielle et en vue latérale avec coupe partielle, un ensemble de connexion électro-optique selon l'invention après montage.

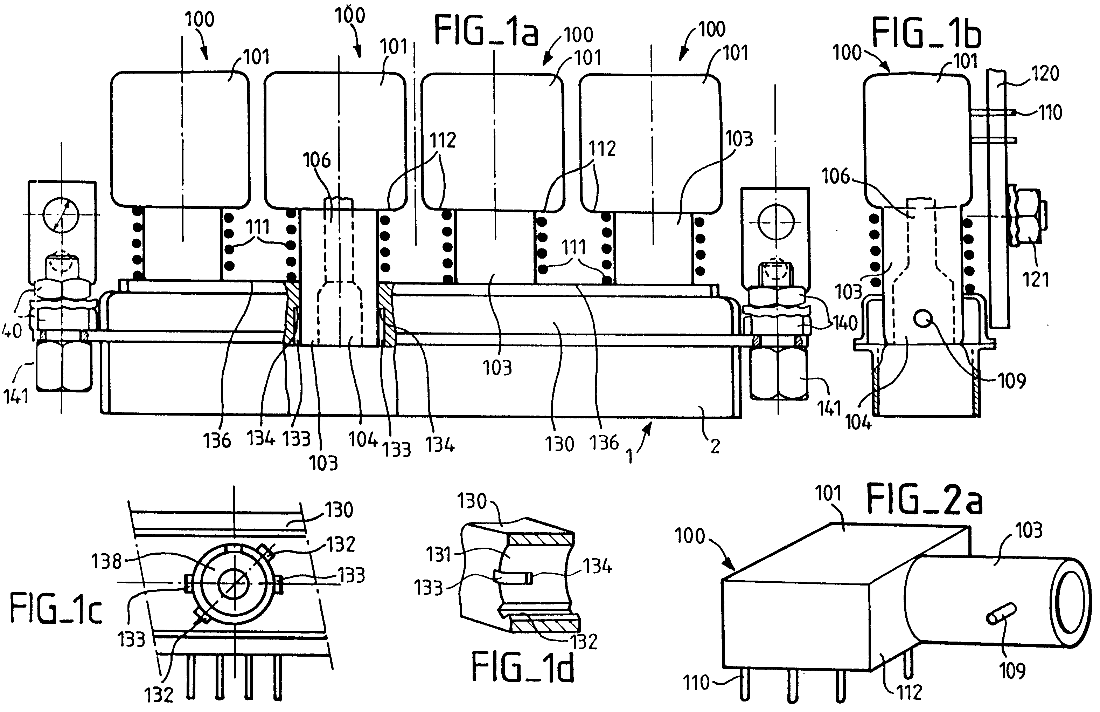

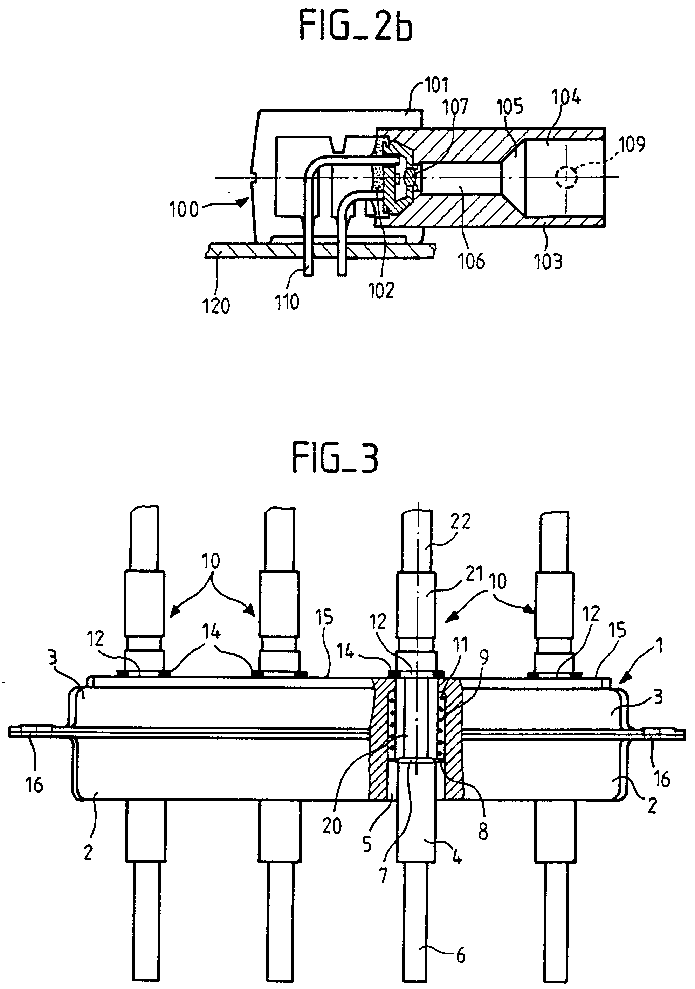

Selon les figures 1a à 1d, et 2a et 2b, une embase active désignée par le repère général 100, conforme au standard industriel ST se présente sous la forme d'un boîtier parallélépipédique 101 en matière plastique contenant un composant électro-optique 102, par exemple une diode laser ou une photo-diode. Ce boîtier comporte une face avant 112, un tube 103, par exemple métallique, pour permettre la réception de la fibre optique. Le tube 103, de forme extérieure cylindrique définit un logement intérieur 104 également cylindrique, se raccordant au composant électro-optique 102 par une partie en entonnoir 105 et un alésage 106 de diamètre 2,5 mm aboutissant à la face interne 107 de l'embase. L'alésage 106 est destiné à recevoir un élément 6 de même section de la fiche assurant le guidage précis de la fibre. Cet élément sera guidé pour son introduction dans l'alésage 106 par l'entonnoir 105. L'embase est en outre pourvue de deux tétons ou ergots 109 diamétralement opposés coopérant avec des organes homologues du corps central 130 dans lequel les embases 100 sont destinées selon l'invention à être montées.

Le plus souvent, les embases 100 sont pourvues de broches 110 permettant le soudage direct sur une carte de circuit imprimé 120, généralement sur une partie de bord de celle-ci afin de permettre une insertion et un retrait plus aisés.

En se reportant plus particulièrement aux figures 1a à 1d, les embases 100 sont montées collectivement dans un corps central 130. Pour ce faire, les ergots 109 sont tout d'abord introduits dans des rainures débouchantes 132, ménagées dans des ouvertures 138 du corps central 130, et par rotation de l'embase 100, l'ergot atteint l'entrée 133 d'une fente d'une rainure non débouchante 133 dans le fond 134 duquel elle est rappelée par un ressort 111 qui est disposé autour de la partie cylindrique 103 entre d'une part, la face arrière 136 du corps central 130 et la face avant 112 du boîtier 101. De la sorte, les embases 100 sont à la fois maintenues en butée arrière dans le corps central 130 et sont repérées angulairement par coopération entre les ergots 109 et les rainures non débouchantes 133 dans leur position choisie.

L'autre élément de connexion désigné par le repère général 1 comporte un corps central en deux parties référencées 2 et 3 solidarisées entre elles au niveau de l'épaulement 16. Le corps central 2, 3 comporte des ouvertures 5 dans lesquelles sont disposées les fiches de connexion désignées par le repère général 10 et comportent successivement, de l'arrière vers l'avant, une arrivée du câble optique 22, une région cylindrique 21 formant traversée et dans laquelle sont ménagées successivement une première rainure 12 pour recevoir une collerette 14, par exemple un clip, une région hexagonale 20, une deuxième région annulaire 7 pour recevoir une collerette 8, une région d'extrémité élargie 4, et la portion dépassante de fibre optique 6. Autour de la région hexagonale 20, est disposé un ressort s'appuyant d'une part sur le fond 11 de l'ouverture 5 et d'autre part, sur la collerette 8 de manière à forcer la fiche 10 en butée avant par coopération entre la collerette 14 de la face arrière 15 du corps central 3, lorsque l'ensemble de connexion est en position déconnectée.

Les fiches 10 sont repérées angulairement par coopération entre la région hexagonale 20 et l'ouverture de même profil (non représentée) de la face arrière 15.

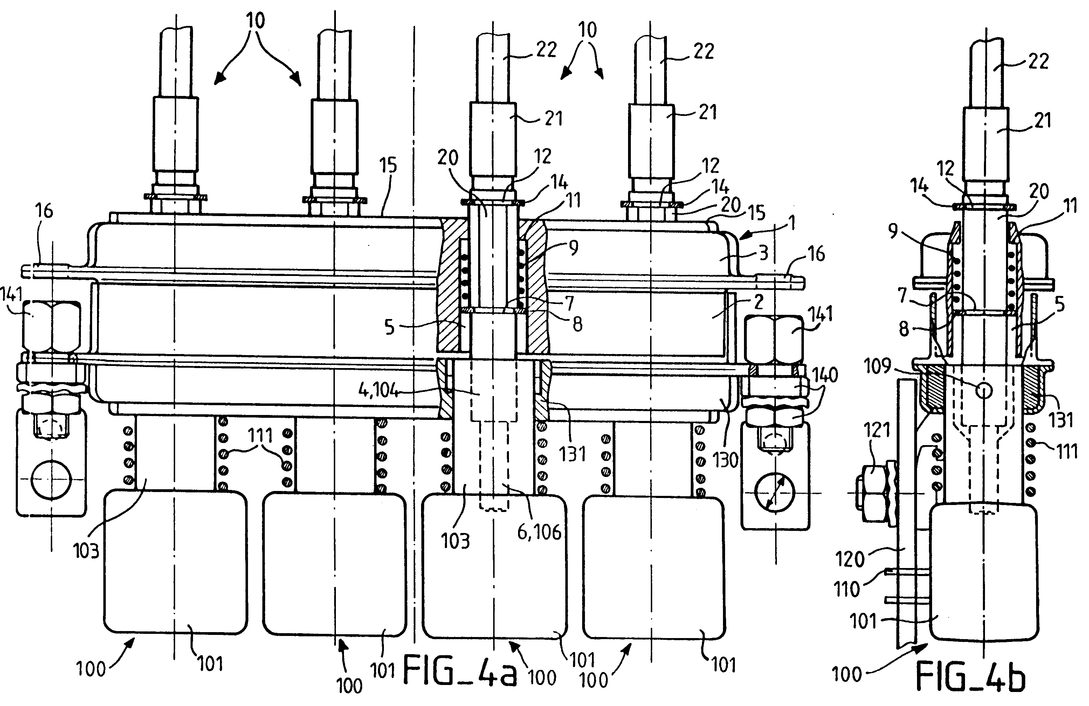

L'assemblage des deux éléments de connexion pour former un ensemble de connexion électro-optique est représenté aux figures 4a et 4b. Les fiches 10 et les embases 100 interconnectées sont présentées en alignement l'une par rapport à l'autre, et les extrémités avant 6 des fiches sont introduites dans les alésages 106 avec recul des collerettes 14 par rapport à la face arrière 15 du corps central 3. On obtient ainsi pour chaque couple fiche 10-embase 100 de l'ensemble de connexion, un degré de liberté axial vers l'arrière du corps central 3 puisque, les fiches 10 et les embases 100 étant assemblées, il est possible de déplacer légèrement les embases 100 vers l'avant, celles-ci restant toujours référencées angulairement, les rainures 133 et la collerette 14 venant s'écarter encore plus de la face arrière 15, alors que le contact optique est maintenu entre la fiche 10 et l'embase 100. A titre de variante, le rappel élastique des parties avant des fiches 10 et/ou des embases 100 peut s'effectuer collectivement.

## Revendications

1. Ensemble de connexion électro-optique, caractérisé en ce qu'il comporte :
- un premier élément de connexion comportant un premier corps central (130) dans lequel sont disposés une pluralité de premiers éléments optiques qui sont des embases actives (100) dont chacune comporte au moins un composant électro-optique (102),
- un deuxième élément de connexion comportant un deuxième corps central (2, 3) dans lequel sont disposés une pluralité de deuxièmes éléments optiques qui sont des fiches de connexion (10) de fibre optique,
les embases actives (100) présentant une première région avant (103) logée dans le premier corps central (130) et les fiches de connexion (10) présentant une deuxième région avant (4, 6, 20) logée dans le deuxième corps central (2, 3), les premières (103) et deuxièmes (4, 6, 20) régions avant étant conformées de manière à permettre une interconnexion optique entre les fiches (10) et les embases (100) qui se correspondent, au moins une des première ou deuxième régions avant étant rappelée élastiquement.

2. Ensemble de connexion selon la revendication 1, caractérisé en ce qu'il comporte pour les embases actives (100) un premier élément élastique (111) rappelant élastiquement la première région avant (103) et pour les fiches (10), un deuxième élément élastique (9) rappelant élastiquement la deuxième région avant (4, 6, 20), les premiers (111) et deuxièmes (9) éléments élastiques étant disposés de manière telle que, pour chaque couple (10, 100) de premier et deuxième éléments optiques, la région avant d'un des éléments optiques du couple est rappelée en butée arrière sur le corps central dans lequel il est disposé et la région avant de l'autre élément optique du couple est rappelée en butée avant sur le corps central dans lequel il est disposé.

3. Ensemble de connexion selon la revendication 2, caractérisé en ce que les premières régions avant (103) des embases actives (100) sont rappelées en butée arrière sur le premier corps central (130) par les premiers éléments élastiques (111) alors que les deuxièmes régions avant (4, 6, 20) des fiches de connexion (10) sont rappelées en butée avant sur le deuxième corps central (2, 3) par les deuxièmes éléments élastiques (9).

4. Ensemble de connexion selon une des revendications 1 à 3, caractérisé en ce que le premier élément élastique est un premier ressort (111) intercalé entre une face arrière (136) du premier corps central (130) et un boîtier (101) de l'embase, dans lequel est logé ledit composant électro-optique (102).

5. Ensemble de connexion selon une des revendications précédentes, caractérisé en ce que la première région avant (103) comporte au moins un ergot (109) et en ce que le premier corps central (130) présente au moins une rainure non débouchante (133) au fond (134) de laquelle l'ergot (109) vient en butée arrière sous l'action du premier élément élastique (111).

6. Ensemble de connexion selon la revendication 5, caractérisé en ce que le premier corps central (130) présente au moins une rainure débouchante (132) décalée angulairement par rapport à la rainure non débouchante (133) de manière à permettre d'introduire la première région avant (103) dans le premier corps central (130), puis, par rotation, de permettre à l'ergot (109) de rejoindre l'entrée de la rainure non débouchante (133) puis venir en butée arrière au fond (134) de celle-ci.

7. Ensemble de connexion selon une des revendications précédentes, caractérisé en ce que la deuxième région avant (4, 6, 20) des fiches de connexion est logée dans une ouverture du deuxième corps central, en ce que le deuxième élément élastique (9) est disposé dans une région élargie (5) de cette ouverture, entre le fond (11) de cette région élargie (5) et une première collerette (8) portée par la deuxième partie avant (4, 6, 20), et en ce que la deuxième partie avant (4, 6, 20) porte une deuxième collerette (14) disposée de manière à assurer ladite butée vers l'avant (15).

8. Ensemble de connexion selon une des revendications précédentes, caractérisé en ce que les fiches de connexion (10) sont montées avec repérage angulaire.

9. Elément de connexion, caractérisé en ce qu'il comporte un premier corps central (130) dans lequel sont disposés une pluralité de premiers éléments optiques qui sont des embases actives (100) dont chacune comporte au moins un composant électro-optique (102) et présente une première région avant (103) logée dans le premier corps central (130) et rappelée élastiquement par des premiers éléments élastiques (111).

10. Elément de connexion selon la revendication 9, caractérisé en ce que la première région avant (103) comporte au moins un ergot (109) et en ce que le premier corps central (130) présente au moins une rainure non débouchante (133) au fond (134) de laquelle l'ergot (109) vient en butée arrière sous l'action du premier élément élastique (111).

11. Elément de connexion selon la revendication 10, caractérisé en ce que le premier corps central (130) présente au moins une rainure débouchante (132) décalée angulairement par rapport à la rainure non débouchante (133) de manière à permettre d'introduire la première région avant (103) dans le premier corps central (130), puis, par rotation, de permettre à l'ergot (109) de rejoindre l'entrée de la rainure non déobuchante (133) puis, venir en butée arrière au fond (134) de celle-ci.

12. Elément de connexion, caractérisé en ce qu'il comporte un deuxième corps central (2, 3) dans lequel sont disposés une pluralité de deuxièmes éléments optiques qui sont des fiches de connexion (10) de fibre optique présentant une deuxième région avant (4, 6, 20) logée dans le deuxième corps central (2, 3) et qui est rappelée élastiquement par des deuxièmes éléments élastiques (9).
